# FASCICULE DE BREVET EUROPEEN

(11) **EP 0 727 129 B1**
(45) Date de publication et mention de la délivrance du brevet: **23.06.1999**
(21) Numéro de dépôt: 94931631.9
(22) Date de dépôt: 25.10.1994
(51) Int. Cl.: H04Q 7/32

(54) **INSTALLATION DE RADIO-TELEPHONE NUMERIQUE A TERMINAUX MOBILES**
DIGITALE FUNKTELEFONANLAGE MIT MOBILEN ENDGERÄTEN
MOBILE TERMINAL DIGITAL RADIOTELEPHONE FACILITY

(30) Priorité: 26.10.1993 FR 9312740
(43) Date de publication de la demande: 21.08.1996
(73) Titulaire: ALCATEL, 75008 Paris (FR)
(72) Inventeur: MESSIET, Samira, F-78000 Versailles (FR)
(74) Mandataire: Lamoureux, Bernard
(86) Numéro de dépôt international: FR9401242
(87) Numéro de publication internationale: WO9512293

(56) Documents cités:
- EP-A- 0 556 970
- EP-A- 0 586 081
- WO-A-91/12698
- WO-A-92/19078
- WO-A-94/08433
- L'éCHO DES RECHERCHES, no.139, 1990, ISSY-LES-MOULINEAUX (FR) pages 1 - 20 P.JOLIE ET AL 'Une application de la carte à microprocesseur: le module d'identité d'abonné du radiotéléphone numérique européen'

## Description

La présente invention se rapporte à une installation de radio-téléphone numérique à terminaux mobiles dits "téléphones de voiture". Elle concerne en particulier des terminaux mobiles utilisables dans une telle installation et des moyens spécifiques de contrôle d'accès inclus dans cette dernière.

S'agissant d'une installation de Radio-téléphonie numérique mobile classique, la couverture radioélectrique est actuellement organisée de la façon suivante :

La surface terrestre de couverture est découpée en une mosaïque de cellules hexagonales dont le rayon peut, en fonction de l'environnement, être compris entre un et trente-cinq kilomètres. En rase campagne il est de l'ordre de trente-cinq kilomètres, tandis qu'il est de l'ordre de un à trois kilomètres en agglomération.

Une station de base fixe, ou "BTS" ("Base Station Transceiver System"), est placée au centre de chaque cellule hexagonale de couverture et est chargée de la liaison radioélectrique avec tous les terminaux mobiles qui sont situés dans le périmètre de cette cellule. Elle rassemble donc tous les équipements radioélectriques nécessaires à la couverture d'une cellule.

Chaque terminal mobile numérique est le plus souvent prévu pour recevoir une carte à puce enfichable, dite "carte SIM", qui contient toutes les données propres à l'abonnement de l'usager et permet à ce dernier d'accéder au réseau téléphonique via la station de base la plus proche. Le terminal n'est donc opérationnel, et personnalisé, qu'après introduction de cette carte SIM par l'abonné. L'accès au réseau n'est généralement possible qu'après avoir composé, sur le clavier du terminal mobile, le code personnel d'accès ou "PIN code".

Le réseau comprend à cet effet des moyens de contrôle d'accès constituant ce qu'il est convenu d'appeler un HLR ("Home Location Register") et un VLR ("Visitor Location Register"), où sont disponibles de telles données et codes propres à l'abonnement de l'usager et agencés pour permettre ou non des communications concernant cet abonné. Les HLR et VLR sont consultés par les BTS.

Cependant, de nombreux utilisateurs souhaitent pouvoir être joints à tout moment, même pendant leur absence. En conséquence, plusieurs constructeurs proposent d'offrir en plus, à chaque terminal mobile, la fonction "répondeur-enregistreur" et/ou la fonction de réception de messages courts, dite fonction "SMS" ("Short Messages Service").

Comme par construction un terminal mobile ne peut fonctionner sans la présence de la carte SIM, à l'exception bien-entendu de l'émission de certains appels d'urgence, il est alors nécessaire à l'usager de laisser sa carte SIM dans le mobile s'il veut utiliser la fonction répondeur-enregistreur et/ou la fonction de réception de messages courts. Bien entendu, il doit alors préalablement avoir tapé son code d'accès.

Cette solution classique présente deux inconvénients majeurs :
. l'abonné ne peut alors pas utiliser sa carte SIM lors de ses déplacements pour téléphoner à partir d'un autre terminal, puisque cette carte doit rester dans le terminal d'origine s'il souhaite recevoir des messages ;
. le terminal mobile n'est pas sécurisé puisqu'il contient une carte SIM pour laquelle le code d'accès a été tapé :
   n'importe qui peut téléphoner à partir de ce terminal aux frais de cet abonné, et ce terminal peut être volé et alors utilisé sans difficulté pour téléphoner, toujours aux frais de cet abonné.

Par ailleurs, dans l'article "Une application de la carte à microprocesseur : le module d'identité d'abonné du radiotéléphone numérique européen" de P. Jolie et al, publié dans l'Echo des Recherches, n° 139, du 1er trimestre 1990, il est mentionné un terminal mobile pour radio téléphonie numérique aménagé pour recevoir une carte à puce personnalisée, dite carte SIM, extractible et, en outre, une autre carte à puce SIM, auxiliaire, qui est à demeure dans ce terminal mobile, cette carte SIM auxiliaire correspondant au même abonnement personnalisé que ladite carte SIM classique, et possédant les mêmes fonctionnalités que cette dernière, la carte SIM extractible classique étant toutefois, lorsqu'elle est introduite dans le terminal mobile, rendue prioritaire sur ladite carte SIM auxiliaire.

Toutefois les deux cartes ayant les mêmes fonctions, le problème reste entier.

On trouvera aussi un terminal à deux cartes SIM dans le document EP-0 556 970A1, mais il ne possède qu'un seul lecteur et n'exploite qu'une carte à la fois, l'une ou l'autre également accessible, ce qui ne résoud pas le problème ici posé, pas plus d'ailleurs que le document WO 91/12 698 qui décrit un poste à une carte seulement.

L'invention vise donc à remédier aux inconvénients présentés ci-dessus. Elle se rapporte à cet effet à une installation de radio-téléphonie numérique à terminaux mobiles, cette installation comportant un réseau avec au moins une station de base fixe, et des terminaux téléphoniques mobiles qui sont, pour au moins certains d'entre eux, conçus pour ne pouvoir accéder au réseau qu'après qu'un abonné y ait introduit une carte à puce personnalisée, dite "carte SIM", qui est une carte extractible, et cette installation étant caractérisée en ce que ces mêmes terminaux mobiles sont chacun conçus pour recevoir, en plus de ladite carte SIM extractible "classique", une autre carte à puce SIM auxiliaire, de format réduit telle qu'une carte "micro-SIM", qui est à demeure dans ce terminal mobile et ne peut normalement en être extraite que par un technicien, cette carte SIM auxiliaire correspondant, avec un autre numéro de codage interne au réseau, au même abonnement personnalisé que ladite carte SIM classique et possédant les mêmes fonctionnalités que cette dernière, mais étant rendue, par le réseau et/ou par le terminal, spécifique pour seulement assurer certains services prédéfinis, tels que typiquement une fonction "répondeur-enregistreur" et/ou une fonction de réception de messages courts, ces services prédéfinis incluant, éventuellement une restriction d'appels sortants, et ces deux cartes SIM étant gérées comme deux cartes distinctes, la carte SIM enfichable et extractible classique étant toutefois, lorsqu'elle est introduite dans le terminal mobile, rendue prioritaire sur ladite carte SIM auxiliaire.

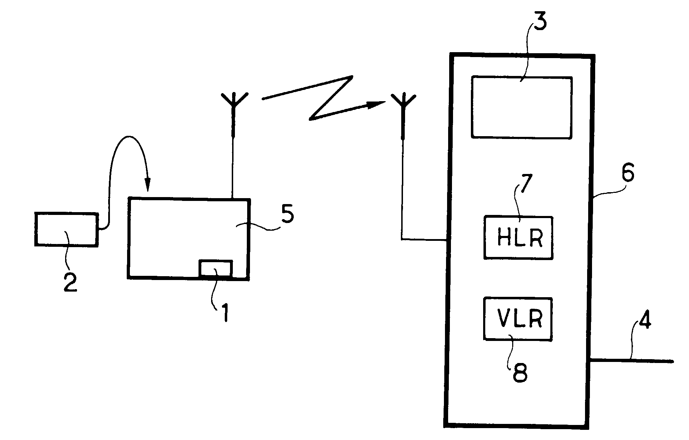

L'invention sera bien comprise, et ses avantages et autres caractéristiques ressortiront mieux, lors de la description suivante d'un exemple non limitatif de réalisation, en référence à la figure unique annexée qui est un schéma synoptique simplifiée dans cette installation.

En se référant à cette figure unique, le réseau 6 est défini comme comportant, entre autres, la station de base 3, un HLR 7 et un VLR 8, ainsi que son raccordement 4 au réseau téléphonique général.

La référence 5 désigne un des terminaux mobiles, ou "téléphones de voiture", qui sont associés, par transmission radioélectrique, à la station de base 3, et donc au réseau.

Le terminal 5 est de structure banalisée, c'est-à-dire qu'il n'est pas à priori personnalisé par un abonné particulier.

Cette personnalisation ne peut être effectuée que quand cet abonné à introduit, dans le terminal 5 qui est donc prévu à cet effet, une carte à puce 2, dite "carte SIM". Ce n'est qu'à cette condition que cet abonné peut accéder au réseau, c'est-à-dire librement émettre et recevoir des informations téléphoniques. En général, cette mise en fonction du terminal mobile 5 ne peut en outre être effectuée qu'après que l'abonné ait tapé son code d'accès secret, ou code "PIN".

Cette carte 2, que par la suite on appellera "SIM 2", est de format "ISO" standard, c'est-à-dire qu'elle est de la taille d'une carte bancaire.

Pour l'abonné, elle correspond à un numéro d'abonné sur lequel sont faites les facturations. Pour le réseau, elle correspond en outre à un numéro de codage propre, connu du HLR ou du VLR, qui est différent de celui de l'abonné.

L'inconvénient précité est qu'ainsi le terminal 5 ne peut pas fonctionner, en l'absence de l'abonné, en répondeur-enregistreur ou en réception de messages courts si cet abonné n'a pas laissé sa carte SIM 2 dans ce terminal.

Pour remédier à cet inconvénient, l'invention prévoit d'incorporer à demeure à l'intérieur du terminal 5, une autre carte "SIM" 1, que par la suite on appellera "SIM 1".

Cette carte SIM 1 est identique à la carte SIM 2, c'est-à-dire qu'elle a les mêmes caractéristiques et fonctionalités. En revanche, elle en diffère mécaniquement, car elle est de format réduit, typiquement de format dit "micro-SIM". En outre, elle ne peut pas être introduite dans le mobile 5 par simple enfichage, mais elle doit être posée (vissée et cachée) dans ce dernier par un technicien.

Conformément à l'invention, cette carte SIM 1 correspond au même numéro d'abonné que la carte SIM 2. En revanche, elle correspond, pour le réseau, à un numéro de codage propre qui est différent de celui de la carte SIM 2. Les HLR et VLR associent au même numéro d'abonné les numéros de codage des SIM1 et SIM2. Les protocoles de gestion par le réseau 6 (et/ou par le terminal 5) de ces deux cartes SIM 2 et SIM1 sont différents.

En outre, et c'est un point essentiel, le protocole de gestion de la carte SIM 1 est prévu pour ne conférer à cette carte que des fonctions de service spécifiques, ici d'une part une fonction de répondeur/enregistreur et d'autre part une fonction de réception de messages courts.

A titre optionnel, ce protocole de gestion inclut, pour cette carte SIM 1, une fonction de restriction d'appels sortants.

Outre les fonctions d'appels d'urgence que chaque terminal 5 peut effectuer, conformément aux obligations légales, quoi qu'il en soit, la carte SIM 1 ne pourra donc ici permettre d'émettre vers la station 3 que les annonces de répondeur/enregistreur ou les annonces spécifiques au service de messagerie courte (ou "SMS") préalablement enregistrées.

Par ailleurs, la carte SIM 2 est, en raison de son protocole de gestion, rendue prioritaire sur cette carte SIM 1. En d'autres termes, l'insertion de la carte SIM 2 annule l'inscription de la carte SIM 1. Si la carte SIM 1 est en cours de communication au moment de l'insertion de la carte SIM 2, cette insertion est préférentiellement prévue pour n'être prise en considération qu'à la fin de cette communication.

A noter que, préférentiellement, la mise en service de la carte SIM 1 par l'usager, lorsqu'il s'absente et souhaite en conséquence pouvoir recevoir des messages, n'est possible qu'après que cet usager ait tapé un code d'accès, ou code PIN, particulier à cette carte SIM 1.

Lorsque la carte SIM 2 est introduite, le mobile 5 peut toujours fonctionner en répondeur/enregistreur. De plus, il peut toujours recevoir des messages courts sur cette carte SIM 2 : l'usager peut alors emmener sa carte SIM 2 avec lui, et lire ces messages courts plus tard sur un autre terminal.

Le fait que, bien que correspondant à un même numéro d'abonné que la carte SIM 2 (et donc à une seule et même facturation d'abonné), la carte SIM 1 corresponde, pour le réseau, à un numéro de codage propre et donc différent, permet en particulier au réseau de gérer une fonction d'interrogation à distance de la carte SIM 1 par la carte SIM 2. Les messages provenant de la carte SIM 1 peuvent être sécurisés au moyen de signaux DTMF.

Dans le cas ou l'usager s'est absenté et se trouve en un endroit où il ne dispose personnellement pas d'un terminal mobile, il lui est aussi possible de demander un transfert de ses appels vers un autre terminal, par exemple celui d'un secrétariat d'une usine où il est en visite, en introduisant sa carte SIM 2 dans cet autre terminal. Sans rester en permanence à côté de cet autre terminal, il peut ainsi y recevoir des messages sur sa carte SIM 2, alors que lui-même se trouve ailleurs dans cette usine.

Le routage des appels est alors automatiquement exécuté, et ces appels sont transmis vers ladite carte SIM 2 pour un fonctionnement en réception de messages sur répondeur/enregistreur.

Pour assurer ce fonctionnement, cet autre terminal dans lequel est introduite cette carte SIM 2 doit être en permanence allumé et positionné sur le réseau, et la fonction de réception de messages sur répondeur/enregistreur doit être activée. Dans le cas d'utilisation d'un Service de Messages Courts, cet autre terminal émet à l'appelant un message courte indiquant l'absence de l'appelé et lui 1 demandant de laisser un message court.

D'un point de vue interne les deux cartes SIM 1 et SIM 2 sont donc gérées comme deux cartes distinctes. Certains paramètres mémorisés sur la carte SIM 2 peuvent en particulier différents de ceux mémorisés sur la carte SIM 1 : les répertoires peuvent par exemple être différents sur ces deux cartes, surtout si la carte SIM 2 a été utilisée sur un autre terminal.

Afin de faciliter la gestion des cartes SIM 1 et SIM 2, aucun transfert de paramètres n'est toutefois envisagé entre ces deux cartes.

La mémorisation des messages courts point à point est menée indifféremment sur l'une ou l'autre des cartes SIM 1 et SIM 2. Un menu spécifique permet à l'utilisateur d'accéder au champ souhaité.

Comme il va de soi, l'invention n'est pas limitée à l'exemple de réalisation qui vient d'être décrit, et de nombreuses variantes et extensions de ce système de radio-téléphone sont envisageables sans sortir du cadre de cette invention.

## Revendications

1. Installation de radio-téléphonie numérique à terminaux mobiles (5), cette installation comportant un réseau (3, 4, 6, 7, 8) avec au moins une station de base fixe (3), et des terminaux téléphoniques mobiles (5) qui sont, pour au moins certains d'entre eux, conçus pour ne pouvoir accéder au réseau qu'après qu'un abonné y ait introduit une carte à puce personnalisée (1), dite "carte SIM", qui est une carte extractible, ces mêmes terminaux mobiles (5) étant chacun conçus pour recevoir, en plus de ladite carte SIM extractible "classique" (2), une autre carte à puce SIM (1), auxiliaire, qui est à demeure dans ce terminal mobile, cette carte SIM auxiliaire (1) correspondant au même abonnement personnalisé que ladite carte SIM classique (1), la carte SIM extractible classique (2) étant toutefois, lorsqu'elle est introduite dans le terminal mobile (5), rendue prioritaire sur ladite carte SIM auxiliaire (1) et possédant les mêmes fonctionnalités que cette dernière, caractérisée en ce que ladite carte SIM auxiliaire est rendue, par le réseau (3, 4, 6, 7, 8) et/ou par le terminal (5), spécifique pour seulement assurer certains services prédéfinis, tels que typiquement une fonction "répondeur-enregistreur" et/ou une fonction de réception de messages courts, ces services prédéfinis incluant éventuellement une restriction d'appels sortants.

2. Installation selon la revendication 1, caractérisée en ce que cette carte SIM auxiliaire (1) est d'un format réduit, par exemple d'un format "micro-SIM".

3. Installation selon la revendication 1 ou la revendication 2, caractérisée en ce que cette carte SIM auxiliaire (1) bénéficie d'un numéro de codage interne au réseau (3, 4, 6, 7, 8) qui est différent du numéro de codage propre à la carte SIM classique (2) bien que ces deux cartes bénéficient du même numéro d'abonné.

4. Installation selon l'une des revendications 1 à 3, caractérisée en ce que ces deux cartes sont gérées comme deux cartes distinctes.

5. Installation selon l'une des revendications 3 ou 4, caractérisée en ce qu'elle est prévue pour gérer une possibilité d'interrogation à distance des messages emmagasinés dans ladite carte SIM auxiliaire (1) à partir d'un autre terminal du réseau, sous condition d'avoir introduit ladite carte SIM classique (2) dans cet autre terminal.

6. Installation selon l'une des revendications 1 à 5, caractérisée en ce qu'elle est prévue pour permettre à l'usager qui s'est absenté et qui se trouve en un endroit où il ne dispose personnellement pas d'un terminal mobile, de demander un transfert de ses appels vers un autre terminal, par exemple celui d'un secrétariat d'une usine où il est en visite, en introduisant sa carte SIM classique (2) dans cet autre terminal : sans rester en permanence à côté de cet autre terminal, il peut ainsi y recevoir des messages sur sa carte classique SIM (2).

7. Installation selon l'une des revendications 1 à 6, caractérisée en ce qu'elle est prévue pour recevoir des messages courts aussi bien sur ladite carte SIM auxiliaire (1) que sur ladite carte SIM classique (2) lorsque cette dernière est enfichée dans le terminal (5) qui contient cette carte SIM auxiliaire (1).

8. Terminal mobile pour radio téléphonie numérique aménagé pour recevoir une carte à puce personnalisée, dite carte SIM, extractible et, en outre, une autre carte à puce SIM (1), auxiliaire, qui est à demeure dans ce terminal mobile, cette carte SIM auxiliaire (1) correspondant au même abonnement personnalisé que ladite carte SIM classique (1), et possédant les mêmes fonctionnalités que cette dernière, la carte SIM extractible classique (2) étant toutefois, lorsqu'elle est introduite dans le terminal mobile (5), rendue prioritaire sur ladite carte SIM auxiliaire (1), caractérisé en ce que ladite carte SIM auxiliaire est rendue, par le terminal, spécifique pour seulement assurer certains services prédéfinis, tels que typiquement une fonction "répondeur-enregistreur" et/ou une fonction de réception de messages courts, ces services prédéfinis incluant éventuellement une restriction d'appels sortants.

9. Terminal mobile pour radio-téléphonie numérique conforme à la revendication 8, caractérisé en ce que cette carte SIM auxiliaire (1) est d'un format réduit, par exemple d'un format "micro-SIM".

10. Terminal mobile pour radio-téléphonie numérique conforme à la revendication 8 ou 9, caractérisé en ce que cette carte SIM auxiliaire (1) bénéficie d'un numéro de codage interne au réseau (3, 4, 6, 7, 8) qui est différent du numéro de codage propre à la carte SIM classique (2) bien que ces deux cartes bénéficient du même numéro d'abonné.

11. Réseau de radio-téléphonie numérique comprenant des moyens de contrôle d'accès (7, 8) agencés pour associer à un même numéro d'abonné un numéro de codage interne d'une carte SIM extractible, ainsi qu'au moins un code d'accès, et également agencés pour associer à ce même numéro d'abonné au moins un second numéro de codage interne, ainsi qu'un second code d'accès correspondant à une carte SIM auxiliaire, caractérisé en ce que ladite carte SIM auxiliaire est rendue, par ledit réseau, spécifique pour seulement assurer certains services prédéfinis, tels que typiquement une fonction "répondeur-enregistreur" et/ou une fonction de réception de messages courts, ces services prédéfinis incluant éventuellement une restriction d'appels sortants.

12. Réseau de radio-téléphonie numérique conforme à la revendication 11, caractérisé en ce qu'il comprend des moyens (7, 8) pour gérer lesdites cartes SIM extractible et carte SIM auxiliaire comme deux cartes distinctes.

13. Réseau de radio-téléphonie numérique conforme à la revendication 12, caractérisé en ce qu'il comprend des moyens pour gérer une interrogation à distance des messages emmagasinés dans ladite carte SIM auxiliaire contenue dans un terminal du réseau, effectuée à partir d'un autre terminal du réseau dans lequel a été introduite ladite carte SIM extractible associée audit même numéro d'abonné,

14. Réseau de radio-téléphonie numérique conforme à la revendication 12, caractérisé en ce qu'il comprend des moyens (7, 8) pour permettre à l'usager qui s'est absenté et qui se trouve en un endroit où il ne dispose personnellement pas d'un terminal mobile, de demander un transfert de ses appels vers un autre terminal, par exemple celui d'un secrétariat d'une usine où il est en visite, en introduisant sa carte SIM classique (2) dans cet autre terminal : sans rester en permanence à côté de cet autre terminal, il peut ainsi y recevoir des messages sur sa carte classique SIM (2).

15. Réseau de radio-téléphonie numérique conforme à la revendication 12, caractérisé en ce qu'il comprend des moyens (7, 8) pour recevoir des messages courts aussi bien sur ladite carte SIM auxiliaire (1) que sur ladite carte SIM classique (2) lorsque cette dernière est enfichée dans le terminal (5) qui contient cette carte SIM auxiliaire (1).

## Patentansprüche

1. Digitale Funktelefonanlage mit mobilen Endgeräten (5), wobei diese Anlage ein Netz (3, 4, 6, 7, 8) mit wenigstens einer festen Basisstation (3) und mobile Telefonendgeräte (5) aufweist, wovon wenigstens einige dafür ausgelegt sind, nur auf das Netz zugreifen zu können, nachdem ein Teilnehmer dort eine personalisierte Chipkarte (1), "SIM-Karte" genannt, eingeführt hat, die eine herausziehbare Karte ist, wobei dieselben mobilen Endgeräte (5) jeweils dafür ausgelegt sind, zusätzlich zur "klassischen", herausziehbaren SIM-Karte (2) eine weitere SIM-Chipkarte (1), Hilfskarte, aufzunehmen, die auf Dauer in diesem mobilen Endgerät ist, wobei diese Hilfs-SIM-Karte (1) demselben personalisierten Abbonement entspricht wie die klassische SIM-Karte, wobei die klassische, herausziehbare SIM-Karte (2) jedoch, wenn sie in das mobile Endgerät (5) eingesetzt ist, der Hilfs-SIM-Karte (1) übergeordnet wird und die gleichen Funktionalitäten wie diese letztere besitzt, **dadurch gekennzeichnet,** dass die Hilfs-SIM-Karte durch das Netz (3, 4, 6, 7, 8) und/oder durch das Endgerät (5) ausschließlich dafür spezifisch gemacht wird, bestimmte vordefinierte Dienste sicherzustellen, wie typischerweise eine "Antwort/Registrier"-Funktion und/oder eine Empfangsfunktion für kurze Nachrichten, wobei diese vordefinierten Dienste eventuell eine Einschränkung abgehender Gespräche beinhaltet.

2. Anlage nach Anspruch 1, dadurch gekennzeichnet, dass diese Hilfs-SIM-Karte (1) ein verringertes Format hat, z.B. ein "Mikro-SIM"-Format.

3. Anlage nach Anspruch 1 oder Anspruch 2, dadurch gekennzeichnet, dass diese Hilfs-SIM-Karte (1) eine interne Codierungsnummer im Netz (3, 4, 6, 7, 8) zugebilligt bekommt, die von der der klassischen SIM-Karte (2) eigenen Codierungsnummer verschieden ist, obgleich diese beiden Karten dieselbe Teilnehmernummer zugebilligt bekommen.

4. Anlage nach einem der Ansprüche 1 bis 3, dadurch gekennzeichnet, dass diese beiden Karten wie zwei unterschiedliche Karten verwaltet werden.

5. Anlage nach einem der Ansprüche 3 oder 4, dadurch gekennzeichnet, dass sie dafür vorgesehen ist, eine Möglichkeit der Fernabfrage für in der Hilfs-SIM-Karte (1) gespeicherte Nachrichten von einem anderen Endgerät des Netzes aus zu verwalten, unter der Bedingung, dass die klassische SIM-Karte (2) in dieses andere Endgerät eingeführt wurde.

6. Anlage nach einem der Ansprüche 1 bis 5, dadurch gekennzeichnet, dass sie dafür vorgesehen ist, dem Benutzer, der weggegangen ist und der sich an einem Ort befindet, an dem er nicht persönlich über ein mobiles Endgerät verfügt, zu gestatten, eine Übertragung seiner Gespräche zu einem anderen Endgerät anzufordern, z.B. zu dem eines Sekretariats eines Betriebs, den er gerade besucht, indem seine klassische SIM-Karte (2) in dieses andere Endgerät eingeführt wird: so kann er dort Nachrichten auf seiner klassischen SIM-Karte empfangen, ohne dauernd neben diesem anderen Endgerät zu bleiben.

7. Anlage nach einem der Ansprüche 1 bis 6, dadurch gekennzeichnet, dass sie dafür vorgesehen ist, kurze Nachrichten ebenso auf der Hilfs-SIM-Karte (1) wie auf der klassischen SIM-Karte (2) zu empfangen, wenn diese letztere in das Endgerät (5) eingesteckt ist, das diese Hilfs-SIM-Karte (1) enthält.

8. Mobiles Endgerät für die digitale Funktelefonie, das dafür eingerichtet ist, eine herausziehbare, personalisierte Chipkarte, SIM-Karte genannt, und außerdem eine weitere SIM-Chipkarte (1), Hilfskarte, aufzunehmen, die auf Dauer in diesem mobilen Endgerät ist, wobei diese Hilfs-SIM-Karte (1) demselben personalisierten Abonnement entspricht wie die klassische SIM-Karte (1) und die gleichen Funktionalitäten wie diese letztere besitzt, wobei die klassische, herausziehbare SIM-Karte (2) jedoch, wenn sie in das mobile Endgerät (1) eingeführt ist, der Hilfs-SIM-Karte (1) übergeordnet wird, dadurch gekennzeichnet, dass die Hilfs-SIM-Karte durch das Endgerät spezifisch gemacht wird, um ausschließlich bestimmte vordefinierte Dienste sicherzustellen, wie typischerweise eine "Antwort/Registrier"-Funktion und/oder eine Empfangsfunktion für kurze Nachrichten, wobei diese vordefinierten Dienste eventuell eine Beschränkung abgehender Gespräche beinhaltet.

9. Mobiles Endgerät für digitale Funktelefonie gemäß Anspruch 8, dadurch gekennzeichnet, dass diese Hilfs-SIM-Karte (1) ein verringertes Format hat, beispielsweise ein "Mikro-SIM"-Format.

10. Mobiles Endgerät für digitale Funktelefonie gemäß Anspruch 8 oder 9, dadurch gekennzeichnet, dass diese Hilfs-SIM-Karte (1) eine interne Codierungsnummer im Netz (3, 4, 6, 7, 8) zugebilligt bekommt, die von der der klassischen SIM-Karte (2) eigenen Codierungsnummer verschieden ist, obwohl diese beiden Karten dieselbe Teilnehmernummer zugebilligt bekommen.

11. Digitales Funktelefonienetz, das Mittel (7, 8) zur Zugangssteuerung umfasst, die so ausgestattet sind, dass derselben Teilnehmernummer eine interne Codierungsnummer für eine herausziehbare SIM-Karte sowie wenigstens ein Zugangscode zugeordnet wird, und auch so ausgestattet sind, dass derselben Teilnehmernummer wenigstens eine zweite interne Codierungsnummer sowie ein zweiter Zugangscode zugeordnet wird, der einer Hilfs-SIM-Karte entspricht, dadurch gekennzeichnet, dass die Hilfs-SIM-Karte durch das Netz spezifisch gemacht wird, um ausschließlich bestimmte vordefinierte Dienste sicherzustellen, wie typischerweise eine "Antwort/Registrier"-Funktion und/oder eine Empfangsfunktion für kurze Nachrichten, wobei diese vordefinierten Dienste eventuell eine Einschränkung abgehender Gespräche beinhaltet.

12. Digitales Funktelefonienetz gemäß Anspruch 11, dadurch gekennzeichnet, dass es Mittel (7, 8) umfasst, um die herausziehbaren SIM-Karte und die Hilfs-SIM-Karte wie zwei getrennte Karten zu verwalten.

13. Digitales Funktelefonienetz gemäß Anspruch 12, dadurch gekennzeichnet, dass es Mittel zur Fernabfrage von Nachrichten umfasst, die in der in einem Endgerät des Netzes enthaltenen Hilfs-SIM-Karte gespeichert sind, die von einem anderen Endgerät des Netzes aus ausgeführt wird, in welches die zur selben Teilnehmernummer gehörige, herausziehbare SIM-Karte eingeführt wurde.

14. Digitales Funktelefonienetz nach Anspruch 12, dadurch gekennzeichnet, dass es Mittel (7, 8) umfasst, um dem Benutzer, der weggegangen ist und sich an einem Ort befindet, an dem er persönlich nicht über ein mobiles Endgerät verfügt, zu gestatten, eine Übertragung seiner Gespräche zu einem anderen Endgerät anzufordern, z.B. dem eines Sekretariats eines Betriebs, den er gerade besucht, indem seine klassische SIM-Karte (2) in dieses andere Endgerät eingeführt wird: so kann er dort Nachrichten auf seiner klassischen SIM-Karte (2) empfangen, ohne dauernd neben diesem anderen Endgerät zu bleiben.

15. Digitales Funktelefonienetz nach Anspruch 12, dadurch gekennzeichnet, dass es Mittel (7, 8) umfasst, um kurze Nachrichten ebenso auf der Hilfs-SIM-Karte (1) wie auf der klassischen SIM-Karte (2) zu empfangen, wenn diese letztere in das Endgerät (5) eingsteckt ist, das diese Hilfs-SIM-Karte (1) enthält.

## Claims

1. Digital radiotelephone installation with mobile terminals (5), said installation including a fixed base station (3), which is an element of the network (3, 4, 6, 7, 8), and mobile telephone terminals (5) at least some of which are designed to be unable to access the network until a user has inserted therein an extractable personalised smart card (1) ("SIM card"), said mobile terminals (5) being each designed to receive, in addition to said extractable "conventional" SIM card (2), another, auxiliary SIM smart card (1) which remains in said mobile terminal at all times, said auxiliary SIM card (1) corresponding to the same personalised subscription as said conventional SIM card (1), the extractable conventional SIM card (2) taking precedence over said auxiliary SIM card (1) when it is inserted into the mobile terminal (5), however, and having the same functionality as the latter, characterised in that said auxiliary SIM card is assigned by the network (3, 4, 6, 7, 8) and/or by the terminal (5) only specific predefined services, such as typically an answering function and/or a short messages service function, said predefined services possibly including outgoing call restriction.

2. Installation according to claim 1 characterised in that said auxiliary SIM card (1) has a small format, for example a "micro-SIM" format.

3. Installation according to claim 1 or claim 2 characterised in that said auxiliary SIM card (1) has a code number internal to the network (3, 4, 6, 7, 8) that is not the same as the code number specific to the conventional SIM card (2), although both cards have the same subscriber number.

4. Installation according to any one of claims 1 to 3 characterised in that said two cards are administered as two separate cards.

5. Installation according to claim 3 or 4 characterised in that it is adapted to administer a facility for remote interrogation of messages stored in said auxiliary SIM card (1) from another terminal of the network subject to insertion of said conventional SIM card (2) in that other terminal.

6. Installation according to any one of claims 1 to 5 characterised in that it is adapted to enable an absent user at a location where they do not have personal access to a mobile terminal to request transfer of calls to another terminal, for example that of a secretary in a plant they are visiting, by inserting their conventional SIM card (2) in that other terminal: without remaining near said other terminal, they can then receive messages on their conventional SIM card (2) therein.

7. Installation according to any one of claims 1 to 6 characterised in that it is adapted to receive short messages on said auxiliary SIM card (1) and on said conventional SIM card (2) when the latter is plugged into the terminal (5) that contains said auxiliary SIM card (1).

8. Digital radiotelephone mobile terminal adapted to receive an extractable personalised smart card ("SIM card") and, furthermore, another, auxiliary SIM smart card (1) that remains in said mobile terminal at all times, said auxiliary SIM card (1) corresponding to the same personalised subscription as said conventional SIM card (1) [sic] and having the same functionality as the latter, the extractable conventional SIM card (2) taking precedence over said auxiliary SIM card (1) when it is inserted into the mobile terminal (5), however, characterised in that said auxiliary SIM card is assigned by the terminal only specific predefined services, such as typically an answering function and/or a short messages service function, said predefined services possibly including outgoing call restriction.

9. Digital radiotelephone mobile terminal according to claim 8 characterised in that said auxiliary SIM card (1) has a smaller format, for example a "micro-SIM" format.

10. Digital radiotelephone mobile terminal according to claim 8 or claim 9 characterised in that said auxiliary SIM card (1) has a code number internal to the network (3, 4, 6, 7, 8) that is not the same as the code number specific to the conventional SIM card (2), although both cards have the same subscriber number.

11. Digital radiotelephone network comprising access control means (7, 8) adapted to associate with the same subscriber number an internal code number of an extractable SIM card and at least one access code and likewise adapted to associate with the same subscriber number at least a second internal code number and a second access code corresponding to an auxiliary SIM card, characterised in that said auxiliary SIM card is assigned by said network only specific predefined services, such as typically an answering function and/or a short messages service function, said predefined services possibly including outgoing call restriction.

12. Digital radiotelephone network according to claim 11 characterised in that it comprises means (7, 8) for administering said extractable SIM card and said auxiliary SIM card as two separate cards.

13. Digital radiotelephone network according to claim 12 characterised in that it comprises means for administering remote interrogation of messages stored in said auxiliary SIM card contained in a terminal of the network from another terminal of the network into which said extractable SIM card associated with said same subscriber number has been inserted.

14. Digital radiotelephone network according to claim 12 characterised in that it comprises means (7, 8) enabling the user who is absent at a location where they do not have personal access to a mobile terminal to request transfer of their calls to another terminal, for example that of a secretary in a plant they are visiting, by inserting their conventional SIM card (2) into said other terminal: without remaining near said other terminal, they can then receive messages on their conventional SIM card (2) therein.

15. Digital radiotelephone network according to claim 12 characterised in that it comprises means (7, 8) for receiving short messages on said auxiliary SIM card (1) or on said conventional SIM card (2) when the latter is plugged into the terminal (5) that contains said auxiliary SIM card (1).
